# FASCICULE DE BREVET EUROPEEN

(11) **EP 2 257 657 B1**
(45) Date de publication et mention de la délivrance du brevet: **31.08.2011**
(21) Numéro de dépôt: 09721208.8
(22) Date de dépôt: 20.02.2009
(51) Int. Cl.: C25C 3/20, C25C 7/06

(54) **CONTROLE DE L'ISOLEMENT DES UNITES D'INTERVENTION UTILISEES DANS UNE SALLE D'ELECTROLYSE POUR LA PRODUCTION D'ALUMINIUM PAR ELECTROLYSE IGNEE**
ÜBERWACHUNG DER ISOLIERUNG VON INTERVENTIONSEINHEITEN, DIE IN EINEM ELEKTROLYSERAUM ZUR HERSTELLUNG VON ALUMINIUM DURCH SCHMELZELEKTROLYSE VERWENDET WERDEN
MONITORING OF THE INSULATION OF INTERVENTION UNITS USED IN AN ELECTROLYSIS ROOM FOR PRODUCING ALUMINIUM BY IGNEOUS ELECTROLYSIS

(30) Priorité: 25.02.2008 FR 0801004
(43) Date de publication de la demande: 08.12.2010
(73) Titulaire: E.C.L., 59790 Ronchin (FR)
(72) Inventeur: MARCHAND, Patrick, F-59810 Lesquin (FR); L'HEUREUX, Didier, F-59790 Ronchin (FR)
(74) Mandataire: Mérigeault, Thierry Louis Henri
(86) Numéro de dépôt international: PCT/FR2009/000190
(87) Numéro de publication internationale: WO 2009/115689

(56) Documents cités:
- FR-A- 2 351 526
- US-A1- 2002 074 224

## Description

L'invention concerne les machines de service et autres unités d'intervention qui sont utilisées dans les usines de production d'aluminium par électrolyse ignée et qui nécessitent l'emploi d'un pont roulant. Elle concerne plus particulièrement la surveillance de l'isolement de structure et de puissance de ces dispositifs.

L'aluminium est produit industriellement par électrolyse ignée, à savoir par électrolyse de l'alumine en solution dans un bain de cryolithe fondue, appelé bain d'électrolyte, selon le procédé bien connu de Hall-Héroult. Le bain d'électrolyte est contenu dans des cuves, dites « cuves d'électrolyse », comprenant un caisson en acier, qui est revêtu intérieurement de matériaux réfractaires et/ou isolants, et un ensemble cathodique situé au fond de la cuve. Des anodes en matériau carboné sont partiellement immergées dans le bain d'électrolyte. L'ensemble formé par une cuve d'électrolyse, ses anodes et le bain d'électrolyte est appelé une cellule d'électrolyse.

Les usines contiennent un grand nombre de cellules d'électrolyse disposées en ligne, dans des bâtiments appelés halls ou salles d'électrolyse, et raccordées électriquement en série à l'aide de conducteurs de liaison, de façon à optimiser l'occupation au sol des usines. Les cellules sont généralement disposées de manière à former deux ou plusieurs files parallèles qui sont électriquement liées entre elles par des conducteurs d'extrémité. Le courant d'électrolyse passe ainsi en cascade d'une cellule à la suivante.

En fonctionnement, une usine d'électrolyse nécessite des interventions sur les cellules d'électrolyse parmi lesquelles figurent, notamment, le remplacement des anodes usées par des anodes neuves, le prélèvement de métal liquide des cellules et les prélèvements ou ajouts d'électrolyte. Afin d'effectuer ces interventions, les usines les plus modernes sont équipées d'une ou plusieurs unités de service comprenant un pont mobile qui peut être translaté au-dessus des cellules d'électrolyse, et le long de celles-ci, un module de service comprenant au moins un chariot apte à être déplacé sur le pont mobile sur lequel sont fixés des organes de manutention et d'intervention (souvent appelés « outils ») - tels que palans, pelles, piqueurs, etc... - ou encore, éventuellement, une cabine de pilotage. Ces unités de service sont souvent appelées "machines de service électrolyse" ou "M.S.E" ("PTA" ou "Pot Tending Assembly" ou "PTM" ou "Pot Tending Machine" en langue anglaise). Il existe d'autres dispositifs d'intervention sur une cellule d'électrolyse qui sont également solidaires d'un pont roulant, par exemple les palonniers de manutention de cuve, appelés également "machine de transport des cathodes" ou "MTC" ("Cathode Transport Assembly" ou "CTA" en anglais) tel que celui décrit dans le brevet FR 2 862 663 de la demanderesse. D'autres dispositifs encore, tels que les poutres dé relevage du cadre anodique, par exemple celle illustrée dans le brevet FR 1 445 602, peuvent être suspendues à un pont mobile. Par la suite, les MSE, les MTC , les ponts mobiles équipés de poutres de relevage du cadre anodique ou encore les autres dispositifs d'intervention sur la cellule nécessitant l'emploi d'un pont roulant seront désignés sous le terme général "unité d'intervention".

Lors de ces interventions, certains outils sont appelés à plonger dans le bain d'électrolyte, à manipuler des anodes et/ou encore à se mouvoir à proximité des montées positives. Volontairement ou accidentellement ces outils entrent en contact avec des éléments portés à un potentiel électrique différent de la terre. Il importe donc que soient isolés électriquement le personnel d'intervention agissant dans la cabine de pilotage ainsi que le matériel embarqué, en particulier l'ensemble des pompes, moteurs et autres électrovannes (ci-après désignés "récepteurs") utilisés pour faire actionner le pont, le chariot et les dispositifs suspendus. Typiquement, dans la plupart des installations, les cuves sont traversées par un courant de plusieurs centaines de milliers d'ampères avec un voltage entre anodes et cathode voisin de 4 volts. Mais, comme les cuves sont reliées entre elles électriquement en série, l'opérateur peut être soumis, en cas de défaut d'isolement des structures et dans des circonstances très particulières, à des surtensions très élevées, pouvant atteindre environ 1500 volts, voire plus, selon le rang de la cellule sur laquelle l'intervention est faite.

Il est recommandé que l'unité de service composée du pont mobile, relié à la terre par le biais du chemin de roulement, du chariot et des dispositifs d'intervention sur la cellule d'électrolyse, soit subdivisée en différentes masses et que celles-ci fassent l'objet de mesures d'isolement séparées. Ainsi, il est d'usage de subdiviser une MSE en au moins quatre parties isolées: le pont mobile, le chariot et la tourelle porte-outils, l'ensemble des outils et enfin la cabine de pilotage. Chacune de ces zones, et en particulier l'ensemble des outils, peut elle-même être subdivisée en masses séparées et isolées les unes des autres. On entend par "masse" une partie conductrice susceptible d'être touchée, qui normalement n'est pas sous tension mais qui peut le devenir en cas de défaut. Plusieurs configurations sont possibles, par exemple la cabine est fixée soit sur le chariot, soit sur la tourelle. Mais il importe de respecter la règle selon laquelle tout outil appelé à entrer en contact avec le bain d'électrolyse (soit directement, soit par le biais de l'anode ou celui de la cathode) ainsi que la cabine, appelée à accueillir du personnel, doivent être séparés de la terre par au moins deux niveaux d'isolants: en cas de défaut d'isolement sur une masse, le matériel ou l'opérateur est protégé par l'isolation non défectueuse de l'autre masse. Toutefois il importe que le défaut soit vite repéré et réparé.

Entre deux masses adjacentes, on a installé des isolants de structure, placés aux interfaces mécaniques (isolement de structure). Comme une interface entre deux masses peut comprendre plusieurs isolants, on appellera par la suite "niveau d'isolant" l'ensemble de ces isolants de structure associés à une interface entre deux masses. Par le biais d'une pluralité de transformateurs de séparation, on a pu transmettre, au niveau de chaque masse, une puissance électrique sur un circuit isolé alimentant les récepteurs associés à ladite masse, par exemple des moteurs électriques, des pompes de vérin, des électrovannes, etc. (isolement de puissance). Dans un premier temps, on effectuait, en particulier lors des interventions de maintenance, un contrôle de l'isolement de puissance au niveau de chaque masse et un contrôle de l'isolement d'une masse par rapport à sa voisine. Mais il s'agissait là de contrôles ponctuels et il devient nécessaire d'effectuer un contrôle régulier de ces deux types d'isolement tout au long de la vie de l'unité d'intervention. Cependant, nous n'avons trouvé jusqu'à la présente invention aucune méthode, aucun dispositif permettant d'assurer un contrôle fiable, permanent et systématique tant de l'isolement de puissance que de l'isolement de structure pour des unités d'intervention telles que les MSE ou les MTC.

En ce qui concerne les circuits de puissance, le schéma de liaison à la terre (SLT) devrait suivre, pour des raisons de continuité de service, un régime IT (neutre impédant, masse à la terre). Dans ce type de SLT, le neutre est relié à la terre volontairement via une impédance de forte valeur (typiquement plusieurs milliers d'ohms) et les masses sont interconnectées normalement. Au premier défaut, il n'y a aucun danger pour les personnes, mais il est nécessaire de supprimer ce défaut avant l'apparition d'un second défaut qui provoquerait un courant de court-circuit entre deux phases.

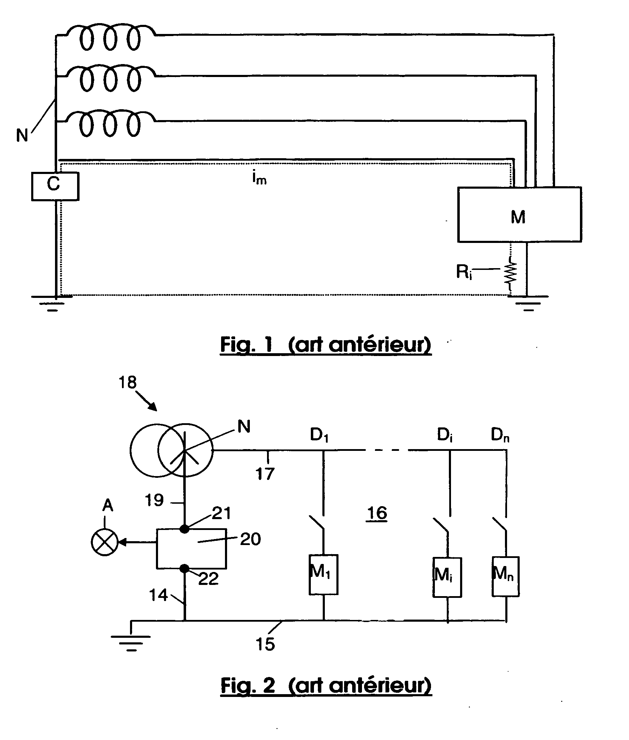

On connaît par ailleurs les contrôleurs permanents d'isolement (CPI) qui sont des appareils électroniques permettant de détecter un défaut sur des installations de type IT, courantes dans l'industrie ou dans les hôpitaux: grâce aux CPI, on ne coupe l'alimentation en électricité qu'en cas de deuxième défaut sur l'installation, ce qui permet à la maintenance de réparer le premier défaut sans avoir de perte de productivité ou interruption des soins. La figure 1 illustre le principe de fonctionnement d'un CPI: ce dernier (C) est connecté à un récepteur (ici un moteur M alimenté en triphasé) relié à la terre. Ce CPI contrôle l'isolement du circuit de puissance par rapport à la terre: en injectant un courant de mesure (iₘ) dans la boucle formée par les conducteurs actifs et la terre (schématisée par un circuit en tiretés sur la figure 1), il mesure la résistance d'isolement R,. Lorsque, pour la première fois, la résistance d'isolement équivalente Rᵢ mesurée est en-dessous d'un certain seuil, le CPI indique l'apparition du premier défaut, envoie une alarme et il faut agir pour supprimer ce défaut avant l'apparition d'un second défaut où le courant est systématiquement coupé par le biais de dispositifs de protection contre les courts-circuits (DPCC).

On a transposé en figure 2 le schéma de principe précédent pour représenter le contrôle d'isolement de puissance en régime IT. Le CPI (20) est raccordé entre le point neutre (N) du transformateur de séparation (18) et la terre. Le neutre, non distribué, n'est pas isolé mais impédant, en raison de l'impédance élevée (supérieure au kΩ) du CPI. L'installation est complétée par une alarme (A). Chaque départ de puissance (Dₗ, .., Dᵢ, ..., Dₙ permet d'alimenter au moins un récepteur (Mₗ, ..., Mᵢ, ..., Mₙ), chacun des récepteurs étant lui-même relié à la terre. Le CPI mesure l'isolement global de l'installation par rapport à la terre. Le CPI est ainsi connecté à une boucle qui est constituée par:
- un premier moyen de liaison électrique (19), typiquement un conducteur, qui relie une borne (21) du CPI (20) au neutre (N) du transformateur (18);
- le dispositif d'alimentation de puissance (17), typiquement deux conducteurs (courant biphasé) ou trois conducteurs (courant triphasé);
- l'ensemble (16) des récepteurs (Mᵢ, ..., Mᵢ, ..., Mₙ) et de leurs dispositifs de raccordement aux départs de puissance (Dₗ, .., Dᵢ, ..., Dₙ);
- le dispositif (15) de liaison à la terre des récepteurs (typiquement une pluralité de conducteurs);
- la terre elle-même qui est reliée à l'autre borne (22) du CPI (20) par un deuxième moyen de liaison électrique (14).

Cependant, dans le cadre précis des unités d'intervention utilisées pour agir sur une cellule d'électrolyse, nous nous trouvons en présence de masses qui, tels la cabine ou les outils, doivent être séparées de la terre par au moins deux niveaux d'isolants, de sorte que l'on ne peut pas suivre le schéma de fonctionnement classique d'un CPI. Si on connecte ce dernier entre deux masses, le risque de double défaut que l'on voulait éviter peut apparaître dès le premier défaut sur le niveau d'isolant entre ces deux masses, si un autre niveau d'isolant a par ailleurs déjà été le siège d'un premier défaut. La coupure classiquement assurée par les DPCC lors de l'apparition d'un deuxième défaut sur un niveau d'isolant n'est ici pas une garantie suffisante contre l'apparition de chocs électriques, voire d'électrocution puisqu'un défaut franc sur un niveau d'isolant et un défaut franc sur un autre niveau d'isolant ne donnent pas lieu à une coupure automatique. De plus, le contexte industriel spécifique de l'électrolyse de l'aluminium fait qu'il n'est pas possible d'admettre une coupure d'énergie, de sorte qu'il est essentiel d'éviter l'apparition d'un deuxième défaut, que celui-ci soit effectivement le deuxième défaut sur un même niveau d'isolant ou un premier défaut sur un autre niveau d'isolant.

Par ailleurs, les dispositifs CPI connus fonctionnent en général avec des tensions inférieures à 600V environ. Des platines haute tension (PHT), appelées également platines d'adaptation haute tension, platines d'accouplement ou encore platine d'adaptation de tension, sont proposées en association avec un dispositif CPI lorsque celui-ci est destiné à fonctionner dans un environnement où les tensions peuvent atteindre plusieurs milliers de volts. Ces PHT comportent un circuit électrique placé entre le CPI et la boucle à contrôler, le circuit étant conçu de telle sorte qu'il permet de limiter la tension aux bornes du CPI à une valeur compatible avec son bon fonctionnement.

La demanderesse a cherché à mettre au point un système qui permet d'assurer un contrôle fiable, permanent et systématique tant de l'isolement de puissance que de l'isolement de structure sur les unités d'intervention d'une cellule d'électrolyse, ledit système ne devant par ailleurs pas présenter le risque du double défaut. De plus, en ce qui concerne l'isolement de structure, le système de contrôle doit être apte à résister à une tension pouvant atteindre 2000 volts.
Un premier objet selon l'invention est un système de contrôle régulier de l'isolement d'une masse séparée d'une pluralité de masses qui lui sont adjacentes et isolée de chacune desdites masses adjacentes par un niveau d'isolant, caractérisé en ce qu'il comporte:
a) un contrôleur permanent d'isolement (CPI), de préférence relié à un dispositif d'alarme;
b) une première portion de circuit de mesure reliant ladite masse, que nous pourrons appeller par la suite "première masse", à une première borne dudit CPI;
c) une deuxième portion de circuit de mesure permettant de relier la deuxième borne dudit CPI à chacune desdites masses adjacentes, ladite deuxième portion de circuit de mesure comprenant au moins un relais que l'on peut commuter, typiquement par voie mécanique ou électromagnétique, de façon à relier électriquement, en alternance, ledit CPI à une portion de circuit de mesure reliée à chacune desdites masses adjacentes;
ledit CPI étant muni d'un moyen permettant d'injecter un courant dans le circuit de mesure formé par la commutation dudit relais et de mesurer la résistance dudit circuit.

Le système selon l'invention permet de contrôler de façon régulière et en alternance, grâce à la commutation d'au moins un relais, l'isolement d'une masse donnée par rapport à ses masses voisines. Il peut le faire de façon fiable grâce à l'emploi d'un CPI unique, utilisé en alternance pour mesurer la résistance d'isolement entre la masse à vérifier et chacune de ses masses adjacentes, autrement dit pour vérifier l'absence de défaut sur chaque niveau d'isolant associé à ladite masse. L'intérêt d'un CPI unique réside dans une meilleure fiabilité des mesures, car un CPI installé au voisinage d'un autre CPI, et fonctionnant en même temps que ce dernier, génère des perturbations suffisamment fortes pour influencer les résultats de la mesure effectuée par ce dernier CPI.

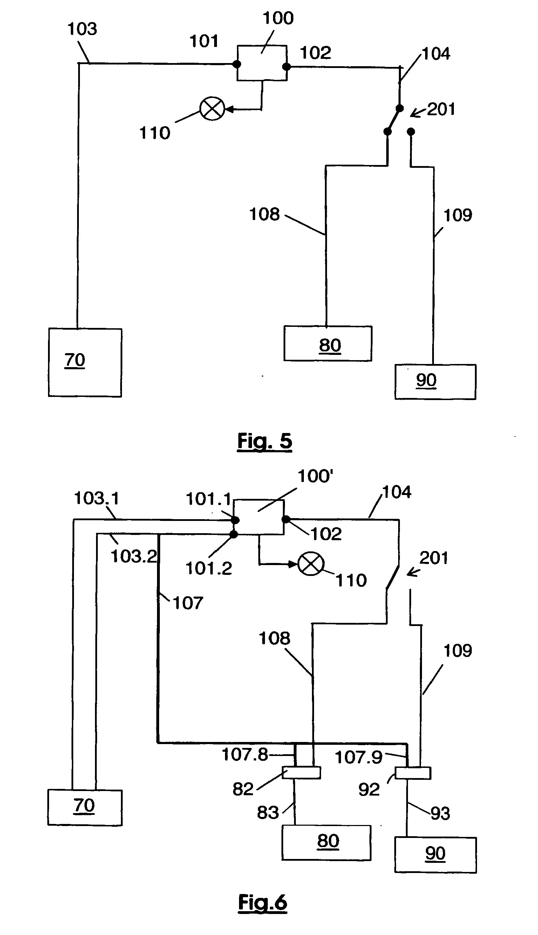

La figure 5 illustre un système de contrôle permanent de l'isolement de structure d'une masse (70) par rapport à ses deux masses adjacentes ((80) et (90)). Il comporte, pour contrôler l'isolement de structure de la masse (70):
a) un contrôleur permanent d'isolement (100), avantageusement relié à un dispositif d'alarme (110);
b) une première portion de circuit de mesure (103) reliant ladite masse à une borne (101) dudit contrôleur permanent d'isolement;
c) une deuxième portion de circuit de mesure (104, 201, 108, 109) permettant de relier l'autre borne (102) dudit contrôleur permanent d'isolement à chacune des masses adjacentes (80, 90) à ladite masse, ladite deuxième portion comprenant au moins un relais (201), actionné typiquement par voie mécanique ou électromagnétique, qui permet de relier électriquement en alternance ledit contrôleur permanent d'isolement à une portion de circuit de mesure (108, resp. 109) reliée à ladite masse adjacente (80, resp. 90).

Le CPI est relié à la masse (70) dont il doit contrôler l'isolement par le conducteur (103) dont une extrémité est connectée sur la masse (70). Il est relié, via le conducteur (104), et en alternance via le relais (201), à la masse voisine (80), via le conducteur (108), dont une extrémité est connectée à la masse (80) ou à la masse voisine (90), via le conducteur (109), dont une extrémité est connectée à la masse (90). Le CPI est muni d'un moyen permettant d'injecter un courant dans le circuit de mesure formé par la commutation du ou des relais et d'un moyen permettant de mesurer la résistance du circuit ainsi formé. Typiquement le moyen permettant d'injecter un courant est un micro-contrôleur associé à générateur de courant De préférence, il émet des signaux électriques avec une fréquence codée, typiquement une impulsion de mesure composée d'impulsions positives et négatives de même amplitude.

Les relais utilisés sont des dispositifs typiquement actionnés mécaniquement ou, de préférence, électromagnétiquement pour basculer d'une portion de circuit de mesure à l'autre. Avantageusement, la synchronisation entre la commutation du ou des relais et l'injection du courant de mesure dans le nouveau circuit est gérée par automate, de préférence programmable.

Pour que le résultat de la mesure soit fiable, il faut être sûr que l'indication d'une résistance d'isolement infinie soit bien la conséquence d'un isolement parfait et non celle de la coupure du câble de mesure. Pour éviter un tel écueil, il est recommandé de doubler les câbles du circuit de mesure. Dans une modalité préférée de l'invention, on utilise un CPI qui présente au moins une de ses bornes dédoublée en deux plots et qui est muni d'un système permettant de contrôler l'intégrité d'une boucle connectée d'une part sur un plot de ladite borne dédoublée et d'autre part, soit sur l'autre plot de ladite borne, soit sur l'autre borne: si un signal envoyé sur une extrémité de la boucle n'est pas reçu au niveau de l'autre extrémité de ladite boucle, on peut en conclure que l'un des câbles de la boucle est dégradé et le CPI envoie une alarme pour qu'on puisse le réparer ou le remplacer.

Dans une modalité préférée de l'invention, la première borne, dédoublée en deux plots, est reliée à la première portion de circuit, qui comprend deux câbles reliant ledit CPI à la masse dont l'isolement par rapport à ses voisines est à tester, et la deuxième portion de circuit de mesure, qui permet de relier ledit CPI à chacune des masses adjacentes, est elle-même dédoublée, la deuxième liaison électrique ne passant pas obligatoirement par le relais et reliant l'ensemble des masses adjacentes à l'un des plots de la borne dédoublée du CPI.

Dans le cadre du contrôle d'isolement de structure des masses appartenant à une unité d'intervention utilisée pour agir sur une cellule d'électrolyse, le CPI utilisé risque de devoir fonctionner avec des tensions très élevées, dépassant 600 V. Avantageusement le CPI utilisé a une impédance typiquement supérieure à 1 MΩ, définie de telle sorte que, même avec une surtension de 2000 V entre deux masses, le courant susceptible de traverser un être humain entrant simultanément en contact avec ces deux masses reste inférieur à une valeur critique, correspondant typiquement au courant de sensibilisation, voire de tétanisation, tels que définis dans une norme de sécurité, par exemple la norme CEI 60479. De plus, le ou les relais utilisés sont de préférence des relais haute tension qui, par définition, peuvent supporter des tensions supérieures à 1500 V. Par ailleurs, il est recommandé d'associer le CPI avec au moins une platine d'adaptation de tension (PHT).

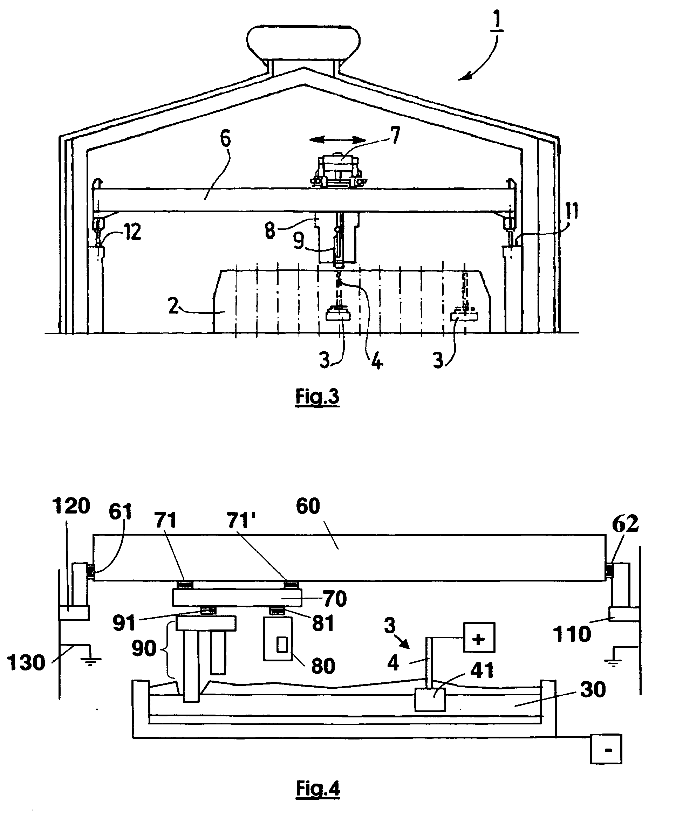

La figure 6 illustre un système de contrôle particulier de l'invention combinant un CPI ayant une forte impédance, étant muni par ailleurs d'un système de contrôle de l'intégrité des circuits de mesure, un câblage de mesure dédoublé et une pluralité de platines d'adaptation de haute tension placées sur les masses adjacentes. Ce système permet le contrôle régulier de l'isolement de structure d'une masse (70) séparée de chacune de ses deux masses adjacentes (80, 90) par un niveau d'isolant (désigné respectivement par 81 et 91 en figure 4). Il comporte, pour contrôler l'isolement de structure de la masse (70):
a) un contrôleur permanent d'isolement (100') dont l'impédance est typiquement supérieure à 1 MΩ, ledit CPI présentant au moins une première borne dédoublée en deux plots (101.1 et 101.2) et étant muni d'un système permettant de contrôler l'intégrité d'une boucle connectée d'une part sur un plot (101.2) de ladite borne dédoublée et d'autre part, soit sur l'autre plot (101.1) de ladite borne, soit sur l'autre borne (102), ledit CPI étant avantageusement relié à un dispositif d'alarme (110);
b) une première portion de double circuit de mesure (103.1, 103.2) reliant ladite masse aux plots (101.1) et (101.2) de ladite première borne dudit CPI, chaque câble (103.1, resp. 103.2) de la première portion de double circuit étant connecté à l'un des plots (101.1, resp. 101.2) de la première borne dédoublée;
c) une pluralité de platines d'adaptation de tension (82, 92), chaque platine d'adaptation de tension étant connectée à l'une desdites masses adjacentes (80, 90);
d) une deuxième portion de double circuit de mesure (104, 201, 108, 109, 107) permettant de relier l'autre borne (102) dudit CPI à chacune des masses adjacentes (80, 90), ladite deuxième portion comprenant au moins un relais (201), actionné typiquement par voie mécanique ou électromagnétique, qui permet de relier électriquement en alternance ledit CPI à une portion de circuit de mesure (108, 82 et 83, resp. 109, 92 et 93) reliée à ladite masse adjacente (80, resp. 90), ladite deuxième portion de circuit étant doublée par un câblage (107, 107.8, 107.9) reliant lesdites platines haute tension (82, 92) à un plot (101.2) de ladite première borne dédoublée, de façon à contrôler l'intégrité de la boucle constituée par la liaison à la platine d'adaptation de tension (104, 201, 108 ou 104, 201, 109) de la masse adjacente (80 ou 90) correspondant au niveau d'isolant testé (81 ou 91) et ledit câblage (107.8 et 107, ou 107.9 et 107).

Il est à remarquer que dans ce schéma l'intégrité des liaisons (83) et (93) entre les masses (80) et (90) et les platines d'adaptation de tension (82) et (92) n'est pas vérifiée: de préférence, lesdites platines d'adaptation de tension sont installées sur les masses auxquelles elles sont associées de telle sorte qu'une de leur bornes est directement reliée électriquement auxdites masses. Typiquement, on réalise une liaison boulonnée desdites platines d'adaptation de tension sur les barres de masse des masses auxquelles elles sont associées.

Pour chaque masse, la mesure d'isolement doit se faire en régime établi mais le temps d'atteinte du régime établi n'est pas connu à l'avance. Le temps nécessaire à une "bonne mesure" d'un CPI dépend en effet des conditions R&C (résistances et capacités) aux bornes de son circuit de mesure et ces paramètres varient de façon aléatoire. Une première solution consiste à définir un temps de réponse forfaitairement, ce qui pénalise la fréquence des contrôles et/ou n'assure pas que la mesure de l'isolement est correcte. Une deuxième solution consiste à piloter les relais à l'aide d'un automate qui prend un compte un signal émis par le CPI indiquant que la mesure effectuée a été validée, que globalement la mesure est terminée et que l'on peut basculer au circuit de mesure suivant. Ceci peut être réalisé en injectant des signaux codés, répétés plusieurs fois dans le circuit de mesure, et en analysant les signaux reçus: la répétition d'un signal reçu cohérent est le signe qu'un régime établi a été atteint et que la mesure est cohérente. On peut alors passer à la mesure sur le circuit suivant. Le CPI peut être aménagé de telle sorte qu'il émet un signal indiquant que, la mesure effectuée ayant été validée et terminée, un ou plusieurs commutateurs peuvent être basculés pour réaliser le circuit de mesure suivant, la commutation du ou des relais pouvant être réalisée à l'aide d'un automate programmable réagissant au signal émis par le CPI. On obtient ainsi un système de gestion intelligent qui mesure de manière fiable et le plus rapidement possible la qualité de l'isolement et ceci, malgré le caractère aléatoire de ce type de mesure.

Un autre objet de l'invention est un système de contrôle régulier de l'isolement d'une unité d'intervention utilisée pour agir sur une cellule d'électrolyse, ladite unité d'intervention étant subdivisée en masses séparées les unes des autres par des niveaux d'isolants, toute masse appelée à entrer en contact avec le bain d'électrolyse ou à accueillir du personnel humain devant être séparée de la terre par au moins deux niveaux d'isolants, caractérisé en ce qu'il comporte un ensemble de systèmes élémentaires de contrôle régulier d'isolement tels que celui décrit précédemment, chacune des masses constitutive de ladite unité d'intervention étant utilisée soit comme première masse, soit comme masse adjacente dans au moins un desdits systèmes élementaires de contrôle régulier.

Ainsi, pour certaines masses de l'unité d'intervention qui possèdent au moins deux masses adjacentes, on peut trouver un système qui comprend:
a) un contrôleur permanent d'isolement (CPI), de préférence relié à un dispositif d'alarme;
b) une première portion de circuit de mesure reliant ladite masse, appelée première masse, à une première borne dudit CPI;
c) une deuxième portion de circuit de mesure permettant de relier la deuxième borne dudit CPI à chacune des masses adjacentes à ladite première masse, ladite deuxième portion comprenant au moins un relais qui permet de relier électriquement en alternance ledit CPI à une portion de circuit de mesure reliée à chacune desdites masses adjacentes;
ledit CPI injectant en alternance, à chaque commutation dudit relais, un courant dans le circuit de mesure ainsi formé, de façon à mesurer la résistance dudit circuit.

Ledit système de contrôle régulier de l'isolement d'une unité d'intervention permet d'effectuer le contrôle d'isolement de structure sur l'ensemble des masses d'une unité d'intervention, bien qu'il comporte des systèmes élémentaires de contrôle qui ne sont pas appliqués à toutes les masses. Le système élémentaire de contrôle d'isolement de structure n'est en effet appliqué qu'aux masses ayant au moins deux masses adjacentes. En particulier, il n'est pas besoin d'utiliser un système spécifique de contrôle de l'isolement de structure des masses périphériques car celles-ci ne sont reliées qu'à une seule autre masse et cette autre masse, possédant au moins deux masses voisines, doit par ailleurs faire l'objet d'un contrôle d'isolement élémentaire, tel que décrit précédemment, au cours duquel la qualité du niveau d'isolant qui la sépare de ladite masse périphérique est testée.

Bien évidemment, lesdits systèmes élémentaires de contrôle d'isolement de structure peuvent comporter une ou plusieurs des caractéristiques additionnelles décrites ci-dessus, en particulier:
- la synchronisation entre la commutation du ou des relais et l'injection du courant de mesure dans le circuit de mesure, gérée par automate, de préférence programmable,
- des premières et deuxièmes portions de circuit de mesure dédoublées,
- un CPI ayant une impédance supérieure à 1 MΩ,
- au moins un relais haute tension,
- des platines d'adaptation haute tension.

Toutes les masses ayant au moins deux masses voisines ne sont pas forcément associées à un système élémentaire de contrôle régulier d'isolement de structure, car ceci entraînerait beaucoup de contrôles redondants. En effet, si l'isolement d'une masse A par rapport à une masse B a déjà été vérifié, il est inutile de vérifier l'isolement de la masse B par rapport à la masse A puisque c'est la qualité du même niveau d'isolant qui est testée. Autrement dit, il n'est pas nécessaire que toutes les masses possédant au moins deux masses voisines séparées par des niveaux d'isolants fassent l'objet d'un contrôle en tant que "première masse" si l'intégrité du niveau d'isolant a déjà été vérifiée alors que ladite masse était utilisée en tant que masse adjacente de l'autre masse sur laquelle un contrôle a été préalablement effectué. Il faut donc définir un scénario qui tienne compte des positions respectives des masses les unes par rapport aux autres puis réaliser un ensemble de circuits de mesure adapté à ce scénario.

De préférence, le CPI est unique non pas seulement pour l'ensemble des mesures relatives à l'isolement d'une masse par rapport à ses voisines mais également pour la totalité des mesures d'isolement de structure qu'il faut effectuer sur l'ensemble des masses constitutives de l'unité d'intervention. Pour cela, lesdites premières portions de circuit de mesure et lesdites deuxièmes portions de circuit de mesure sont agencées de telle sorte qu'un seul CPI est utilisé pour effectuer la totalité des mesures d'isolement. Ici aussi, comme indiqué précédemment, la conception des circuits de mesure permettant de contrôler, à l'aide d'un seul et même CPI, l'isolement de structure de l'ensemble des masses constitutives d'une unité d'intervention est fortement tributaire du choix de la configuration spatiale des différentes masses de l'unité d'intervention. L'organisation spatiale de ces circuits dépend en particulier du type de relais choisi (relais à simple basculement ou relais à commutations multiples). Si on choisit, comme dans l'exemple ci-après, des relais à simple basculement, on doit les installer en cascade, en partant d'une masse particulière faisant office de "pivot".

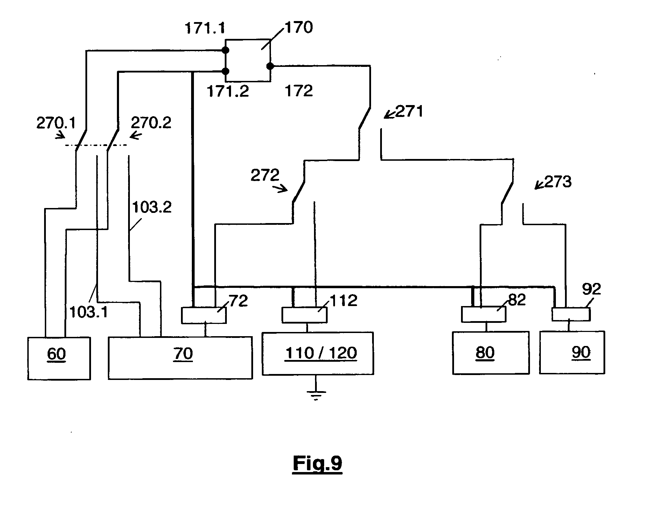

Avantageusement, au lieu de n'installer qu'une platine d'adaptation de tension (PHT) à proximité du CPI, on installe une PHT sur chaque masse qui, dans le scénario de contrôle adopté, doit jouer le rôle d'une masse adjacente à une première masse. On installe par exemple ladite platine d'adaptation haute tension sur la portion de circuit appartenant à la deuxième portion de circuit de mesure et reliée à ladite masse adjacente. Par contre, si une de ces masses adjacentes est par la suite utilisée comme première masse, elle doit être reliée au CPI par l'intermédiaire d'un premier circuit, sans l'intermédiaire d'une platine d'adaptation de tension. On peut voir dans l'exemple qui suit, illustré en figure 9, une masse (70) qui est connectée au CPI d'une part par une première portion de circuit dédoublée (103.1 et 103.2) qui n'est pas reliée à une platine d'adaptation haute tension et qui sert lorsque la masse (70) est utilisée comme première masse et d'autre part par une deuxième portion de circuit reliée à une platine d'adaptation haute tension (72) et qui sert lorsque la masse (70) est utilisée comme masse adjacente à la masse (60).

Avantageusement, le système selon l'invention est complété par un système permettant de contrôler régulièrement l'isolement des circuits de puissance, au niveau de chaque masse de l'unité d'intervention. On utilise en général un CPI, différent de celui utilisé pour contrôler l'isolement de structure. De préférence, les circuits de mesure sont agencés de telle sorte qu'un seul CPI est utilisé pour effectuer le contrôle régulier de l'isolement de puissance au niveau de chaque masse. Pour ce faire, lesdits circuits de mesure comprennent avantageusement des relais que l'on peut commuter pour tester en alternance l'isolement de puissance au niveau de chaque masse.

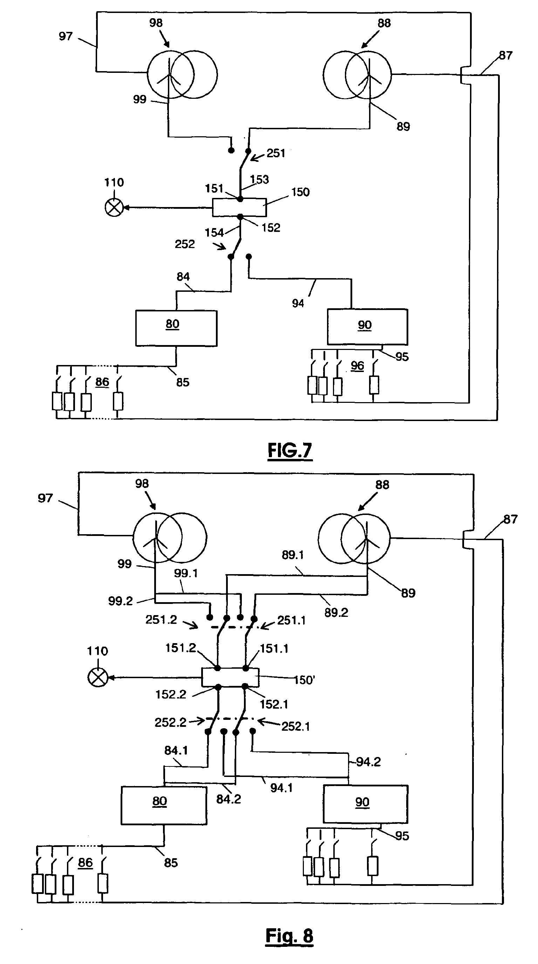

La figure 7 illustre un système qui permet de contrôler de façon régulière l'isolement des circuits de puissance sur deux masses (80) et (90). Le transformateur de séparation (88, resp. 98) permet de transmettre sur les alimentations (87, resp. 97) une puissance électrique vers un ensemble (86, resp. 96) de récepteurs. Le CPI (150), différent du CPI utilisé pour vérifier l'isolement de structure, est raccordé entre le point neutre (N) du transformateur de séparation (88, resp. 98) et la masse associée au circuit de puissance objet du contrôle. En effet, dans le cadre des dispositifs d'intervention sur les cellules d'électrolyse, pour assurer à la fois l'isolement des masses et la continuité de service, on a adopté un schéma IT, le neutre est relié à la masse par une forte impédance. Le neutre est impédant, en raison de l'impédance élevée (supérieure au kΩ) du CPI. L'installation est complétée par une alarme (110). Le transformateur de séparation (88, resp. 98) alimente, grâce au dispositif d'alimentation de puissance (87, resp. 97) l'ensemble de récepteurs (86, resp. 96) associés à une masse (80, resp. 90). Les récepteurs sont reliés à la masse (80, resp. 90) par le biais d'un dispositif de liaison à la masse ((85, resp.95). Grâce à un double relais (251, 252) à basculement synchronisé, le CPI (150) est connecté d'une part au neutre du transformateur (88, resp. 98) par le biais d'une première portion de circuit (153, 251 et 89; resp. 153, 251 et 99) et d'autre part à ladite masse (80, resp. 90) par le biais d'une deuxième portion de circuit (154, 252 et 84; resp. 154, 252 et 94).

Ainsi, avec un seul CPI, on peut contrôler l'isolement des circuits de puissance de deux masses. Le schéma de la figure 7 peut être transposé au contrôle de l'isolement de puissance sur la totalité des masses: pour contrôler l'isolement des circuits de puissance sur chacune des masses de l'unité d'intervention avec un même CPI, chaque masse ayant un transformateur de séparation alimentant, grâce à un dispositif d'alimentation de puissance, l'ensemble des récepteurs associés à ladite masse, lesdits récepteurs étant reliés à ladite masse, ledit CPI est connecté, en alternance grâce à des relais appropriés, par exemple deux relais à basculements multiples synchronisés, d'une part au neutre du transformateur associé à ladite masse par le biais d'une première portion de circuit comprenant l'un desdits relais et d'autre part à ladite masse par le biais d'une deuxième portion de circuit comprenant l'autre desdits relais.

Ici aussi, l'intégrité du câblage de mesure peut être assurée par un dédoublement dudit câblage. La figure 8 présente une variante du système illustré en figure 7, dans laquelle le câblage des circuits de mesure est doublé. Le CPI utilisé présente ici deux bornes dédoublées (151.1et 151.2, 152.1 et 152.2). Les câbles de liaison du CPI aux masses sont dédoublés (84.1 et 84.2; resp; 94.1 et 94.2). De même, les câbles de liaison du CPI aux neutres des transformateurs (88, resp. 98) sont dédoublés (89.1 et 89.2; resp. 99.1 et 99.2). Il y a deux paires synchronisées de relais à basculement couplés (251.1 et 251.2; 252.1 et 252.2).

Un autre objet de l'invention est un procédé de contrôle de l'isolement d'une masse séparée d'une pluralité de masses qui lui sont adjacentes et isolée de chacune desdites masses adjacentes par un niveau d'isolant, caractérisé en ce qu'on utilise un système de contrôle régulier de l'isolement d'une masse par rapport à ses voisines, tel que décrit précédemment.

Un autre objet de l'invention est un procédé de contrôle de l'isolement d'une unité d'intervention utilisée dans une salle d'électrolyse pour la production d'aluminium par électrolyse ignée, ladite unité d'intervention étant subdivisée en masses séparées les unes des autres par des niveaux d'isolants, toute masse appelée à entrer en contact avec le bain d'électrolyse ou à accueillir du personnel humain devant être séparée de la terre par au moins deux niveaux d'isolants, caractérisé en ce qu'on utilise un système de contrôle régulier de l'isolement d'une unité d'intervention, tel que décrit précédemment.

La figure 1 illustre le principe de fonctionnement d'un contrôleur permanent d'isolement d'un circuit de puissance.

La figure 2 illustre le schéma de fonctionnement classique d'un contrôleur permanent d'isolement d'un circuit de puissance monté en régime IT.

La figure 3 illustre, vue de face et en section, une salle d'électrolyse typique destinée à la production d'aluminium.

La figure 4 illustre schématiquement les différents niveaux de masses d'une unité de service comprenant un pont mobile et une MSE.

La figure 5 illustre schématiquement un dispositif selon l'invention permettant de contrôler régulièrement l'isolement d'une masse par rapport à ses masses adjacentes.

La figure 6 illustre schématiquement un dispositif semblable au précédent, permettant de contrôler régulièrement, mais avec un doublement du circuit de mesure, l'isolement d'une masse par rapport à ses masses adjacentes.

La figure 7 illustre schématiquement un dispositif permettant de contrôler, régulièrement et avec le même CPI, l'isolement des circuits de puissance sur deux masses.

La figure 8 présente un dispositif semblable au précédent, permettant de contrôler régulièrement, mais avec un doublement du circuit de mesure, l'isolement des circuits de puissance sur deux masses.

La figure 9 illustre schématiquement un dispositif selon l'invention permettant de contrôler en permanence l'isolement de structure sur l'ensemble des masses d'une unité de service.

### EXEMPLE DE REALISATION (FIG.3, FIG.4 et FIG.9)

Les usines d'électrolyse destinées à la production d'aluminium comprennent une zone de production d'aluminium liquide qui comprend une ou plusieurs salles d'électrolyse (1). Telle qu'illustrée à la figure 3, chaque salle d'électrolyse (1) comporte des cellules d'électrolyse (2) et au moins une unité de levage et de manutention, ou "machine de service" (5 = 6 + 7 + 8 + 9). Les cellules d'électrolyse (2) sont normalement disposées en rangées ou files (typiquement côte-à-côte ou tête-à-tête), chaque rangée ou file comportant typiquement une ou plusieurs centaines de cellules. Lesdites cellules (2) comprennent une série d'anodes (3) munies d'une tige métallique (4) destinée à la fixation et au raccordement électrique des anodes à un cadre anodique métallique. La tige d'anode (4) est typiquement de section sensiblement rectangulaire ou carrée. Elle est raccordée à un bloc anodique (41) qui plonge dans le bain d'électrolyse (30).

L'unité de levage et de manutention (5) sert à effectuer des opérations sur les cellules telles qu'un changement d'anode ou le remplissage des trémies d'alimentation en bain broyé et en AlF3 des cellules d'électrolyse. Elle peut également servir à manutentionner des charges diverses, telles que des éléments de cuve, des poches de métal liquide ou des anodes. Ladite unité (5) comprend typiquement un pont roulant (6), un chariot (7) apte à se déplacer sur le pont roulant (6), et, fixés sur un châssis solidaire dudit chariot, une cabine (8) pour l'opérateur et des organes de manutention et d'intervention (appelés « outils »), tels qu'une pelle ou pince à croûte (non illustrée), un piqueur (non illustré) et/ou un organe de manutention (9) muni d'une pince de préhension des anodes.

Le pont roulant (6) repose et circule sur des chemins de roulement (11, 12) disposés parallèlement l'un à l'autre et à l'axe principal - et typiquement longitudinal - du hall (et de la file de cellules). Le pont roulant (6) peut ainsi être déplacé le long de la salle d'électrolyse (1).

En figure 4, nous avons illustré une subdivision possible de l'unité de service précédente en masses isolées les unes par rapport aux autres: les chemins de roulement (110) et (120), tous deux reliés à la terre, le pont (60), l'ensemble (70) qui regroupe le chariot, son châssis qui peut tourner autour d'un axe vertical solidaire dudit châssis, puis la cabine (80) et la tourelle et les outils (90). Chaque masse est séparée de sa voisine par au moins un isolant de structure (61, 62, 71, 71', 81, 91). Il ne s'agit ici que d'un exemple, plusieurs autres configurations sont possibles: en général, par exemple, il n'y a pas d'isolant entre le pont (60) et le chemins de roulement (110) et (120). Cependant, même en l'absence d'isolants de structure (61) et (62), le pont, liée à la terre, doit être considéré comme une masse séparée des autres masses de l'unité d'intervention et isolée de celles-ci, par le biais du niveau d'isolant (71 et 71'). D'autre part, il peut y avoir une séparation plus poussée des masses constituées par les outils qui sont en général montés sur une tourelle, elle-même montée sur le châssis solidaire du chariot (70), en particulier en isolant chacun d'entre eux par rapport à la tourelle et par rapport aux autres outils. Les outils (90) et la cabine (80) sont séparés de la terre par au moins deux niveaux d'isolants (91 et 71 + 71'; 81 et 71 + 71').

La figure 9 illustre un système selon l'invention avec double cablâge des circuits de mesure, adapté à la subdivision telle que présentée à la figure 4. Un seul CPI (170) est utilisé pour contrôler l'isolement de l'ensemble des masses par rapport à leurs voisines. Le contrôle se fait en deux étapes: on utilise d'une part la masse (60) comme première masse pour tester l'isolement de structure du pont (60) par rapport aux masses adjacentes: les chemins de roulement (110) et (120), tous les deux reliés à la terre et constituant une seule masse, et le chariot (70). On utilise d'autre part le chariot (70) comme première masse pour contrôler l'isolement de structure du chariot (70) par rapport à ses masses adjacentes: la cabine (80) et l'ensemble des outils (90). Les relais choisis sont des relais à basculement simple. Les relais 270.1 et 270.2 sont couplés.

Les relais (271), (272) et (273) suivent, en fonction du contrôle à effectuer, les schémas de basculement présentés au tableau 1 ci-dessous, où 0 signifie un contact à gauche, 1 un contact à droite et X une position indifférente.

**Tableau 1**

| contrôle | (270.1) et (270.2) | (271) | (272) | (273) |
|---|---|---|---|---|
| (60)/(110 et 120) | 0 | 0 | 1 | X |
| (60)/(70) | 0 | 0 | 0 | X |
| (70)/(80) | 1 | 1 | X | 0 |
| (70)/(90) | 1 | 1 | X | 1 |

Toutes les masses (70, 110, 120, 80, 90), excepté le pont (60) qui est toujours utilisé en tant que première masse dans le cadre de cet exemple, sont connectées à une partie de la deuxième portion de circuit de mesure par l'intermédiaire d'une platine d'adaptation haute tension (resp. 72, 112, 82, 92). Chaque partie de la deuxième portion de circuit de mesure est elle-même dédoublée: une première série de câbles relie une borne (172) du CPI (170) à une masse à travers un ou plusieurs relais (cf. ci-dessus les schémas de basculement) et une autre série de câbles relie l'ensemble des PHT à un plot (171.2) de l'autre borne du CPI (170). Le CPI est muni d'un système permettant de contrôler l'intégrité des boucles ainsi formées.

## Revendications

1. Système de contrôle régulier de l'isolement d'une masse (70) séparée d'une pluralité de masses (80, 90) qui lui sont adjacentes et isolée de chacune (80, resp. 90) desdites masses adjacentes par un niveau d'isolant (81, resp. 91), **caractérisé en ce qu'**il comporte:
a) un contrôleur permanent d'isolement (CPI) (100), de préférence relié à un dispositif d'alarme (110);
b) une première portion (103) de circuit de mesure reliant ladite masse (70), appelée première masse, à une première borne (101) dudit CPI;
c) une deuxième portion (104, 201, 108, 109) de circuit de mesure permettant de relier la deuxième borne (102) dudit CPI à chacune desdites masses adjacentes, ladite deuxième portion de circuit de mesure comprenant au moins un relais (201) que l'on peut commuter, typiquement par voie mécanique ou électromagnétique, de façon à relier électriquement, en alternance, ledit CPI à une portion (104, 201, 108; resp. 104, 201, 109) de circuit de mesure reliée à chacune (80, resp. 90) desdites masses adjacentes;
ledit CPI étant muni d'un moyen permettant d'injecter un courant dans le circuit de mesure formé par la commutation dudit relais et de mesurer la résistance dudit circuit.

2. Système selon la revendication 1 dans lequel la synchronisation entre la commutation du ou des relais et l'injection du courant de mesure dans le circuit de mesure est gérée par automate, de préférence programmable.

3. Système selon la revendications 1 ou 2, dans lequel ladite première portion de circuit de mesure et ladite deuxième portion du circuit de mesure ont un câblage dédoublé et dans lequel ledit CPI (100'), présentant au moins une de ses bornes dédoublée en deux plots (101.1 et 101.2), est muni d'un système permettant de contrôler l'intégrité d'une boucle connectée d'une part sur un plot (101.1) de ladite borne dédoublée et d'autre part, soit sur l'autre plot (101.2) de ladite borne, soit sur l'autre borne (102).

4. Système selon l'une quelconque des revendications 1 à 3 dans lequel ledit CPI (100, 100') a une impédance supérieure à 1 MΩ, définie de telle sorte que, même avec une surtension de 2000 V entre deux masses, le courant susceptible de traverser un être humain entrant simultanément en contact avec ces deux masses, reste inférieur à une valeur critique, correspondant typiquement au courant de sensibilisation ou au courant de tétanisation tels que définis dans la norme CEI 60479.

5. Système selon l'une quelconque des revendications 1 à 4 dans lequel le ou les dits relais sont des relais haute tension.

6. Système selon l'une quelconque des revendications 1 à 5 dans lequel ledit CPI est associé à au moins une platine d'adaptation de tension.

7. Système selon la revendication 1 comportant, pour contrôler de manière régulière l'isolement d'une masse (70) séparée de chacune de ses masses adjacentes (80, 90) par un niveau d'isolant (81, 91):
a) un CPI (100') dont l'impédance est supérieure à 1 MΩ, ledit CPI présentant au moins une première borne dédoublée et deux plots (101.1 et 101.2) et étant muni d'un système permettant de contrôler l'intégrité d'une boucle connectée d'une part sur un plot (101.2) de ladite borne dédoublée et d'autre part, soit sur l'autre plot (101.1) de ladite borne, soit sur l'autre borne (102), ledit CPI étant avantageusement relié à un dispositif d'alarme (110);
b) une première portion de double circuit de mesure (103.1, 103.2) reliant ladite masse aux plots (101.1) et (101.2) de ladite première borne dudit CPI, chaque câble (103.1, resp. 103.2) de la première portion de double circuit étant connecté à l'un des plots (101.1, resp. 101.2) de ladite première borne;
c) une pluralité de platines d'adaptation de tension (82, 92), chaque platine d'adaptation de tension étant connectée à l'une desdites masses adjacentes (80, 90);
d) une deuxième portion de double circuit de mesure (104, 201, 108, 109, 107) permettant de relier l'autre borne (102) dudit CPI à chacune des masses adjacentes (80, 90), ladite deuxième portion comprenant au moins un relais (201), actionné typiquement par voie mécanique ou électromagnétique, qui permet de relier électriquement en alternance ledit CPI à une portion de circuit de mesure (108, 82 et 83, resp. 109, 92 et 93) reliée à ladite masse adjacente (80, resp. 90), ladite deuxième portion de circuit étant doublée par un câblage (107, 107.8, 107.9) reliant lesdites platines haute tension (82, 92) à un plot (101.2) de ladite première borne dédoublée, de façon à contrôler l'intégrité de la boucle constituée par la liaison à la platine d'adaptation de tension (104, 201, 108 ou 104, 201, 109) de la masse adjacente (80 ou 90) correspondant au niveau d'isolant testé (81 ou 91) et ledit câblage (107.8 et 107, ou 107.9 et 107).

8. Système selon l'une quelconque des revendications 1 à 7 dans lequel ledit CPI émet un signal indiquant que, la mesure effectuée ayant été validée et terminée, un ou plusieurs commutateurs peuvent être basculés pour réaliser le circuit de mesure suivant.

9. Système selon la revendication 8 **caractérisé en ce qu'**il comprend un automate qui pilote le basculement du ou desdits commutateurs lors de la réception dudit signal de fin de mesure émis par le CPI.

10. Système de contrôle régulier de l'isolement d'une unité d'intervention (5) utilisée pour agir sur une cellule d'électrolyse (2), ladite unité d'intervention étant subdivisée en masses (60, 70, 80, 90) séparées les unes des autres par des niveaux d'isolants (71 et 71', 81, 91), toute masse (90, 80) appelée à entrer en contact avec le bain d'électrolyse (30) ou à accueillir du personnel humain devant être séparée de la terre (130) par au moins deux niveaux d'isolants (81 et 71 + 71'; 91 et 71 + 71'), **caractérisé en ce qu'**il comporte un ensemble de systèmes élémentaires de contrôle d'isolement de structure selon l'une quelconque des revendication 1 à 9, chacune desdites masses constitutives de ladite unité d'intervention étant utilisée soit comme première masse, soit comme masse adjacente dans au moins un des dits systèmes élémentaires de contrôle régulier d'isolement de structure.

11. Système selon la revendication 10, **caractérisé en ce que** lesdites premières portions de circuit de mesure et lesdites deuxièmes portions de circuit de mesure sont agencées de telle sorte qu'un seul CPI est utilisé pour effectuer la totalité des mesures d'isolement.

12. Système selon la revendication 10 ou 11 dans lequel une platine d'adaptation de tension est installée sur chacune des dites masses adjacentes.

13. Système selon l'une quelconque des revendications 10 à 12 **caractérisé en ce qu'**il est complété par un système permettant de contrôler régulièrement l'isolement des circuits de puissance au niveau de chaque masse de l'unité d'intervention.

14. Système selon la revendication 13 dans lequel les circuits de mesure sont agencés de telle sorte qu'un seul CPI est utilisé pour effectuer le contrôle régulier de l'isolement de puissance au niveau de chaque masse.

15. Système selon la revendication 14 dans lequel, pour contrôler l'isolement des circuits de puissance sur deux masses (80, resp. 90) avec un même CPI, chaque masse ayant un transformateur de séparation (88, resp. 98) alimentant, grâce à un dispositif d'alimentation de puissance (87, resp. 97), l'ensemble de récepteurs (86, resp. 96) associés à ladite masse (80, resp. 90), lesdits récepteurs étant reliés à ladite masse (80, resp. 90) par le biais d'un dispositif de liaison (85, resp.95) à ladite masse, ledit CPI (150) est connecté, en alternance grâce à deux relais (251, 252) à basculement synchronisé, d'une part au neutre du transformateur (88, resp. 98) par le biais d'une première portion de circuit (153, 251 et 89; resp. 153, 251 et 99) comprenant le premier relais (251) et d'autre part à ladite masse (80, resp. 90) par le biais d'une deuxième portion de circuit (154, 252 et 84; resp. 154, 252 et 94) comprenant le deuxième relais (252).

16. Système selon la revendication 14 dans lequel, pour contrôler l'isolement des circuits de puissance sur chacune des dites masses (60, 70, 80, 90) avec un même CPI, chaque masse ayant un transformateur de séparation alimentant, grâce à un dispositif d'alimentation de puissance, l'ensemble des récepteurs associés à ladite masse, lesdits récepteurs étant reliés à ladite masse, ledit CPI est connecté, en alternance grâce à deux relais à basculements multiples synchronisés, d'une part au neutre du transformateur associé à ladite masse par le biais d'une première portion de circuit comprenant l'un desdits relais et d'autre part à ladite masse par le biais d'une deuxième portion de circuit comprenant l'autre desdits relais.

17. Système selon la revendication 15 ou 16 dans lequel lesdites première et deuxième portion du circuit de mesure ont un câblage dédoublé et dans lequel ledit CPI (150'), présentant chacune de ses bornes dédoublée en deux plots (151.1 et 151.2; 152.1 et 152.2), est muni d'un système permettant de contrôler l'intégrité d'une boucle connectée sur les couples de plots (151.1 et 151.2; 152.1 et 152.2) de chaque borne dédoublée.

18. Procédé de contrôle de l'isolement d'une masse (70) séparée d'une pluralité de masses (80, 90) qui lui sont adjacentes et isolée de chacune (80, 90) desdites masses adjacentes par un niveau d'isolant (81, 91), **caractérisé en ce qu'**on utilise un système de contrôle régulier de l'isolement d'une masse par rapport à ses voisines selon l'une quelconque des revendications 1 à 9.

19. Procédé de contrôle de l'isolement d'une unité d'intervention (5) utilisée pour agir sur une cellule d'électrolyse (2), ladite unité d'intervention étant subdivisée en masses (60, 70, 80, 90) séparées les unes des autres par des niveaux d'isolants (71 et 71', 81, 91), toute masse (90, 80) appelée à entrer en contact avec le bain d'électrolyse ou à accueillir du personnel humain devant être séparée de la terre (130) par au moins deux niveaux d'isolants (81 et 71 + 71'; 91 et 71 + 71'), **caractérisé en ce qu'**on utilise un système de contrôle régulier de l'isolement d'une unité d'intervention selon l'une quelconque des revendications 10 à 17.

## Claims

1. A monitoring system for regularly monitoring the insulation of a frame (70) which is separated from a plurality of adjacent frames (80, 90) and is isolated from each (80, 90 respectively) of said adjacent frames by an insulator level (81, 91 respectively), **characterized in that** it comprises:
a) a permanent insulation monitoring device (IMD) (100), preferably connected to an alarm system (110);
b) a first portion of measuring circuit (103) connecting said frame (70), called "first frame", to a first terminal (101) of said IMD;
c) a second portion (104, 201, 108, 109) of measuring circuit used to connect the second terminal (102) of said IMD to each of said adjacent frames, said second portion of measuring circuit including at least one relay (201) that can be switched, typically mechanically or electromagnetically, in order to alternately connect electrically said IMD to a portion (104, 201, 108; 104, 201, 109 respectively) of measuring circuit connected to each (80, 90 respectively) of said adjacent frames;
said IMD being provided with a means used to inject a current into the measuring circuit formed by the switching of said relay and to measure the resistance of said circuit.

2. A system according to claim 1 in which the synchronization between switching the relay(s) and injecting the measurement current into the measurement circuit is managed by a controller, preferably a programmable controller.

3. A system according to claims 1 or 2, in which said first portion of measuring circuit and said second portion of measuring circuit have duplicated wiring and in which said IMD (100'), having at least one of its terminals duplicated as two studs (101.1 and 101.2), is provided with a system for testing the intactness of a loop connected to a stud (101.1) of said duplicated terminal and also either to the other stud (101.2) of said terminal, or to the other terminal (102).

4. A system according to any one of claims 1 to 3 in which said IMD (100, 100') has an impedance greater than 1 MΩ, defined so that, even with an over-voltage of 2000 V between two frames, the current likely to pass through a human being coming into contact with these two frames simultaneously, is lower than a critical value, corresponding typically to the sensitization or tetanization current as defined in standard CEI 60479.

5. A system according to any of claims 1 to 4 in which said relays are high voltage relays.

6. A system according to any of claims 1 to 5 in which said IMD is associated with at least one voltage adapter plate.

7. A system according to claim 1 including, in order to regularly monitor the insulation of a frame (70) separated from each of its adjacent frames (80, 90) by an insulator level (81,91):
a) an IMD (100') whose impedance is higher than 1 MΩ, said IMD having at least one first terminal duplicated as two studs (101.1 and 101.2) and being provided with a system for testing the intactness of a loop connected to a stud (101.2) of said duplicated terminal and to either the other stud (101.1) of said terminal, or to the other terminal (102), said IMD being advantageously connected to an alarm system (110);
b) a first portion of the double measuring circuit (103.1, 103.2) connecting said frame to the studs (101.1) and (101.2) of the first terminal of said IMD, each cable (103.1, 103.2 respectively) of said first portion of the double circuit being connected to one of the studs (101.1, 101.2 respectively) of said first terminal;
c) a plurality of high voltage adapter plates (82, 92), each high voltage adapter plate being connected to one of said adjacent frames (80, 90);
d) a second portion of the double measuring circuit (104, 201, 108, 109, 107) making it possible to connect the other terminal (102) of said IMD to each of the adjacent frames (80, 90), said second portion including at least one relay (201), typically actuated mechanically or electromagnetically, which makes it possible to alternately connect electrically said IMD to a portion of the measuring circuit (108, 82 and 83, and 109, 92 and 93 respectively) connected to said adjacent frame (80, 90 respectively), said second portion of circuit being duplicated by wiring (107, 107.8,107.9) connecting said high voltage plates (82, 92) to a stud (101.2) on said first duplicated terminal, in order to test the intactness of the loop made by the connection with the voltage adapter plate (104, 201, 108 or 104, 201, 109) of the adjacent frame (80 or 90) corresponding to the insulator level monitored (81 or 91) and said wiring (107.8 and 107, or 107.9 and 107).

8. A system according to any of claims 1 to 7 in which said IMD emits a signal indicating that, the measurement having been validated and completed, one or more switches can be turned to form the next measuring circuit.

9. A system according to claim 8 **characterized in that** it includes a controller which controls said switch(es) during reception of said end of measurement signal emitted by the IMD.

10. A monitoring system for regularly monitoring the insulation of a servicing unit (5) used for working on a electrolytic cell (2), said servicing unit being subdivided into frames (60, 70, 80, 90) separated from each other by insulator levels (71 and 71', 81, 91), any frame (90, 80) likely to come into contact with the electrolytic bath (30) or to accommodate staff having to be separated from the earth (130) by at least two insulator levels (81 and 71 + 71'; 91 and 71 + 71'), **characterized in that** it comprises a set of elementary monitoring systems according to any of claims 1 to 9 for regularly monitoring the structure insulation, each frame making up said servicing unit being used either as a first frame, or as an adjacent frame in at least one of said elementary regular monitoring systems.

11. A system according to claim 10, **characterized in that** said first portions of the measuring circuit and said second portions of the measuring circuit are arranged so that only one IMD is used to carry out all the insulation measurements.

12. A system according to claim 10 or 11 in which a voltage adapter plate is installed on each said adjacent frame.

13. A system according to any of claims 10 to 12 **characterized in that** it is completed by a system making it possible to regularly monitor the insulation of the power circuits at the level of each frame of the servicing unit.

14. A system according to claim 13 in which the measuring circuits are arranged so that only one IMD is used to carry out regular monitoring of the power insulation at the level of each frame.

15. A system according to claim 14 in which, to monitor the insulation of the power circuits on two frames (80, 90 respectively) with the same IMD, each frame having a separation transformer (88, 98 respectively) supplying, via a power supply device (87, 97 respectively), all the receivers (86, 96 respectively) associated with said frame (80, 90 respectively), said receivers being connected to said frame (80, 90 respectively) by means of a connection device (85, 95 respectively) to said frame, said IMD (150) is connected alternately, via two relays (251, 252) with synchronized switching, to the neutral of the transformer (88, 98 respectively) by means of a first portion of circuit (153, 251 and 89; 153, 251 and 99 respectively) including the first relay (251) and also to said frame (80, 90 respectively) by means of a second portion of circuit (154, 252 and 84; 154, 252 and 94 respectively) including the second relay (252).

16. A system according to claim 14 in which, to monitor the power circuit insulation of each of said frames (60, 70, 80, 90) with the same IMD, each frame having a separation transformer supplying, via a power supply device, all the receivers associated with said frame, said receivers being connected to said frame, said IMD is connected, alternately via two relays with synchronized multiple switching, to the neutral of the transformer associated with said frame by means of a first portion of circuit including one of said relays, and also to said frame by means of a second portion of circuit including the other of said relays

17. A system according to claim 15 or 16 in which said first and second portion of the measuring circuit have duplicated wiring and in which said IMD (150 '), having each of its terminals duplicated as two studs (151.1 and 151.2; 152.1 and 152.2), is provided with a system making it possible to test the intactness of a loop connected to the couples of studs (151.1 and 151.2; 152.1 and 152.2) of each duplicated terminal.

18. A process for monitoring the insulation of a frame (70) which is separated from a plurality of adjacent frames (80, 90) and is isolated from each one (80, 90) of said adjacent frames by an insulator level (81, 91), **characterized in that** a monitoring system according to any of claims 1 to 9 is used for regularly monitoring the insulation of a frame from its neighbors.

19. A process for monitoring the insulation of a servicing unit (5) used for working on a electrolytic cell (2), said servicing unit being subdivided into frames (60, 70, 80, 90) separate from each other by insulator levels (71 and 71', 81, 91), any frame (90, 80) likely to come into contact with the electrolysis bath (30) or to accommodate staff having to be separated from the earth (130) by at least two insulator levels (81 and 71 + 71'; 91 and 71 + 71'), **characterized in that** a monitoring system according to any one of claims 10 to 17 is used for regularly monitoring the insulation of the servicing unit.

## Patentansprüche

1. System zur regelmäßigen Überwachung der Isolierung einer Masse (70), die von einer Vielzahl ihr benachbarter Massen (80, 90) getrennt und durch eine Isolierebene (81 bzw. 91) von jeder (80 bzw. 90) der benachbarten Massen isoliert ist, **dadurch gekennzeichnet, dass** es beinhaltet:
a) eine Isolationsüberwachungseinrichtung (CPI) (100), die vorzugsweise mit einer Alarmvorrichtung (110) verbunden ist;
b) einen ersten Messkreisabschnitt (103), der die Masse (70), die sogenannte erste Masse, mit einer ersten Klemme (101) der CPI verbindet;
c) einen zweiten Messkreisabschnitt (104, 201, 108, 109) zum Verbinden der zweiten Klemme (102) der CPI mit jeder der benachbarten Massen, wobei der zweite Messkreisabschnitt mindestens ein Relais (201) enthält, das typischerweise mechanisch oder elektromagnetisch umgeschaltet werden kann, um die CPI im Wechsel elektrisch mit einem Messkreisabschnitt (104, 201, 108 bzw. 104, 201, 109) zu verbinden, der mit jeder (80 bzw. 90) der benachbarten Massen verbunden ist;
wobei die CPI mit einem Mittel ausgestattet ist, welches es ermöglicht, in den durch die Umschaltung des Relais gebildeten Messstromkreis einen Strom einzukoppeln und den Widerstand des Messkreises zu messen.

2. System nach Anspruch 1, bei dem die Synchronisation zwischen der Umschaltung des oder der Relais und der Einkopplung des Messstroms in den Messkreis von einem Automaten verwaltet wird, der vorzugsweise programmierbar ist.

3. System nach Anspruch 1 oder 2, bei dem der erste Messkreisabschnitt und der zweite Messkreisabschnitt eine geteilte Verkabelung haben und bei dem die CPI (100'), bei der mindestens eine ihrer Klemmen in zwei Kontaktstücke (101.1 und 101.2) geteilt ist, mit einem System ausgestattet ist, welches es ermöglicht, die Integrität einer Schleife zu überprüfen, die einerseits an ein Kontaktstück (101.1) der geteilten Klemme und andererseits entweder an das andere Kontaktstück (101.2) dieser Klemme oder an die andere Klemme (102) angeschlossen ist.

4. System nach irgendeinem der Ansprüche 1 bis 3, bei dem die CPI (100, 100') eine Impedanz größer als 1 MΩ hat, die so definiert ist, dass selbst bei einer Überspannung von 2000 V zwischen zwei Massen der Strom, der durch einen Menschen fließen kann, der mit diesen beiden Massen gleichzeitig in Berührung kommt, unter einem kritischen Wert bleibt, der typischerweise dem Sensibilisierungsstrom oder Tetanisierungsstrom wie in der IEC-Norm 60479 definiert entspricht.

5. System nach irgendeinem der Ansprüche 1 bis 4, bei dem das oder die Relais Hochspannungsrelais sind.

6. System nach irgendeinem der Ansprüche 1 bis 5, bei dem die CPI mindestens einer Spannungsanpassungsplatine zugeordnet ist.

7. System nach Anspruch 1, das zur regelmäßigen Überwachung der Isolierung einer Masse (70), welche durch eine Isolierebene (81, 91) von jeder ihrer benachbarten Massen (80, 90) getrennt ist, beinhaltet:
a) eine CPI (100'), deren Impedanz größer als 1 MΩ ist, wobei die CPI mindestens eine erste geteilte Klemme und zwei Kontaktstücke (101.1 und 101.2) aufweist und mit einem System ausgestattet ist, welches es ermöglicht, die Integrität einer Schleife zu überprüfen, die einerseits an ein Kontaktstück (101.2) der geteilten Klemme und andererseits entweder an das andere Kontaktstück (101.1) dieser Klemme oder an die andere Klemme (102) angeschlossen ist, wobei die CPI vorteilhaft mit einer Alarmvorrichtung (110) verbunden ist;
b) einen ersten Doppelmesskreisabschnitt (103.1, 103.2), der die Masse mit den Kontaktstücken (101.1) und (101.2) der ersten Klemme der CPI verbindet, wobei jedes Kabel (103.1 bzw. 103.2) des ersten Doppelmesskreisabschnittes an eins der Kontaktstücke (101.1 bzw. 101.2) der ersten Klemme angeschlossen ist;
c) eine Vielzahl von Spannungsanpassungsplatinen (82, 92), wobei jede Spannungsanpassungsplatine an eine der benachbarten Massen (80, 90) angeschlossen ist;
d) einen zweiten Doppelmesskreisabschnitt (104, 201, 108, 109, 107) zum Verbinden der anderen Klemme (102) der CPI mit jeder der benachbarten Massen (80, 90), wobei der zweite Abschnitt mindestens ein Relais (201) enthält, das typischerweise mechanisch oder elektromagnetisch betätigt wird und es ermöglicht, die CPI im Wechsel elektrisch mit einem Messkreisabschnitt (108, 82 und 83 bzw. 109, 92 und 93) zu verbinden, der mit der benachbarten Masse (80 bzw. 90) verbunden ist, wobei der zweite Abschnitt mit einer Verkabelung (107, 107.8, 107.9) versehen ist, die die Hochspannungsplatinen (82, 92) mit einem Kontaktstück (101.2) der ersten geteilten Klemme verbindet, um die Integrität der Schleife zu überprüfen, die aus der Verbindung der benachbarten Masse (80 oder 90), die der geprüften Isolierebene (81 oder 91) entspricht, mit der Spannungsanpassungsplatine (104, 201, 108 oder 104, 201, 109) und der Verkabelung (107.8 und 107 oder 107.9 und 107) besteht.

8. System nach irgendeinem der Ansprüche 1 bis 7, bei dem die CPI ein Signal aussendet, das anzeigt, dass die durchgeführte Messung validiert und abgeschlossen wurde, so dass ein oder mehrere Schalter umgeschaltet werden können, um den nächsten Messkreis zu realisieren.

9. System nach Anspruch 8, **dadurch gekennzeichnet, dass** es einen Automaten umfasst, der das Umschalten des oder der Schalter beim Empfang des von der CPI ausgesendeten Messabschlusssignals steuert.

10. System zur regelmäßigen Überwachung der Isolierung einer Interventionseinheit (5), die für Tätigkeiten an einer Elektrolysezelle (2) verwendet wird, wobei die Interventionseinheit in Massen (60, 70, 80, 90) unterteilt ist, die durch Isolierebenen (71 und 71', 81, 91) voneinander getrennt sind, wobei jede Masse (90, 80), die mit dem Elektrolysebad (30) in Berührung kommen oder menschliches Personal aufnehmen kann, durch mindestens zwei Isolierebenen (81 und 71 + 71'; 91 und 71 + 71') von der Erde (130) getrennt sein muss, **dadurch gekennzeichnet, dass** es eine Gruppe von Elementarsystemen zur Überwachung der Strukturisolierung nach irgendeinem der Ansprüche 1 bis 9 aufweist, wobei jede der Massen, aus denen die Interventionseinheit besteht, entweder als erste Masse oder als benachbarte Masse in mindestens einem der Elementarsysteme zur regelmäßigen Überwachung der Strukturisolierung verwendet wird.

11. System nach Anspruch 10, **dadurch gekennzeichnet, dass** die ersten Messkreisabschnitte und die zweiten Messkreisabschnitte so angeordnet sind, dass nur eine CPI zur Durchführung aller Isolierungsmessungen verwendet wird.

12. System nach Anspruch 10 oder 11, bei dem auf jeder der benachbarten Massen eine Spannungsanpassungsplatine montiert ist.

13. System nach irgendeinem der Ansprüche 10 bis 12, **dadurch gekennzeichnet, dass** es durch ein System komplettiert ist, mit dem die Isolierung der Leistungsschaltungen an jeder Masse der Interventionseinheit regelmäßig überwacht werden kann.

14. System nach Anspruch 13, bei dem die Messkreise so angeordnet sind, dass nur eine CPI zur Durchführung der regelmäßigen Überwachung der Isolierung der Leistungsschaltungen an jeder Masse verwendet wird.

15. System nach Anspruch 14, bei dem zur Überwachung der Isolierung der Leistungsschaltungen an zwei Massen (80 bzw. 90) mit derselben CPI, wobei jede Masse einen Trenntransformator (88 bzw. 98) aufweist, der durch eine Stromversorgungseinrichtung (87 bzw. 97) sämtliche Empfänger (86 bzw. 96), die der Masse (80 bzw. 90) zugeordnet sind, mit Strom versorgt, wobei die Empfänger über eine Masseverbindungsvorrichtung (85 bzw. 95) mit der Masse (80 bzw. 90) verbunden sind, die CPI (150) im Wechsel durch zwei Relais (251, 252) mit Synchronumschaltung einerseits über einen ersten Stromkreisabschnitt (153, 251 und 89 bzw. 153, 251 und 99), der das erste Relais (251) enthält, an den Nullleiter des Transformators (88 bzw. 98) und andererseits über einen zweiten Stromkreisabschnitt (154, 252 und 84 bzw. 154, 252 und 94), der das zweite Relais (252) enthält, an die Masse (80 bzw. 90) angeschlossen wird.

16. System nach Anspruch 14, bei dem zur Überwachung der Isolierung der Leistungsschaltungen an jeder der Massen (60, 70, 80, 90) mit derselben CPI, wobei jede Masse einen Trenntransformator aufweist, der durch eine Stromversorgungseinrichtung sämtliche Empfänger, die der Masse zugeordnet sind, mit Strom versorgt, wobei die Empfänger mit der Masse verbunden sind, die CPI im Wechsel durch zwei Relais mit Mehrfachsynchronumschaltung einerseits über einen ersten Stromkreisabschnitt, der eins der Relais enthält, an den Nullleiter des der Masse zugeordneten Transformators und andererseits über einen zweiten Stromkreisabschnitt, der das andere Relais enthält, an die Masse angeschlossen wird.

17. System nach Anspruch 15 oder 16, bei dem der erste und zweite Messkreisabschnitt eine geteilte Verkabelung haben und bei dem die CPI (150'), bei der jede ihrer Klemmen in zwei Kontaktstücke (151.1 und 151.2; 152.1 und 152.2) geteilt ist, mit einem System ausgestattet ist, welches es ermöglicht, die Integrität einer Schleife zu überprüfen, die an die Kontaktstückpaare (151.1 und 151.2; 152.1 und 152.2) jeder geteilten Klemme angeschlossen ist.

18. Verfahren zur Überwachung der Isolierung einer Masse (70), die von einer Vielzahl ihr benachbarter Massen (80, 90) getrennt und durch eine Isolierebene (81, 91) von jeder (80, 90) der benachbarten Massen isoliert ist, **dadurch gekennzeichnet, dass** ein System zur regelmäßigen Überwachung der Isolierung einer Masse in Bezug auf ihre Nachbarn nach irgendeinem der Ansprüche 1 bis 9 verwendet wird.

19. Verfahren zur Überwachung der Isolierung einer Interventionseinheit (5), die für Tätigkeiten an einer Elektrolysezelle (2) verwendet wird, wobei die Interventionseinheit in Massen (60, 70, 80, 90) unterteilt ist, die durch Isolierebenen (71 und 71', 81, 91) voneinander getrennt sind, wobei jede Masse (90, 80), die mit dem Elektrolysebad in Berührung kommen oder menschliches Personal aufnehmen kann, durch mindestens zwei Isolierebenen (81 und 71 + 71'; 91 und 71 + 71') von der Erde (130) getrennt sein muss, **dadurch gekennzeichnet, dass** ein System zur regelmäßigen Überwachung der Isolierung einer Interventionseinheit nach irgendeinem der Ansprüche 10 bis 17 verwendet wird.
